# EUROPÄISCHE PATENTSCHRIFT

(11) **EP 1 866 540 B1**
(45) Veröffentlichungstag und Bekanntmachung des Hinweises auf die Patenterteilung: **14.11.2012**
(21) Anmeldenummer: 06707471.6
(22) Anmeldetag: 08.03.2006
(51) Int. Cl.: F02N 11/08, H02J 7/14, B60R 16/02

(54) **SCHALTEINRICHTUNG ZUR VERKNÜPFUNG VERSCHIEDENER ELEKTRISCHER SPANNUNGSEBENEN IN EINEM KRAFTFAHRZEUG**
SWITCHING DEVICE FOR LINKING VARIOUS ELECTRICAL VOLTAGE LEVELS IN A MOTOR VEHICLE
DISPOSITIF DE COMMUTATION POUR COMBINER DIFFERENTS NIVEAUX DE TENSION ELECTRIQUE DANS UNE AUTOMOBILE

(30) Priorität: 06.04.2005 DE 102005015658
(43) Veröffentlichungstag der Anmeldung: 19.12.2007
(73) Patentinhaber: Bayerische Motoren Werke Aktiengesellschaft, 80809 München (DE)
(72) Erfinder: FRANKE, Torsten, 80469 München (DE)
(86) Internationale Anmeldenummer: PCT/EP2006/002110
(87) Internationale Veröffentlichungsnummer: WO 2006/105840

(56) Entgegenhaltungen:
- EP-A- 1 112 896
- WO-A-03/067737
- DE-A1- 4 226 311
- DE-A1- 19 519 298
- DE-A1- 19 752 661

## Beschreibung

Die Erfindung betrifft eine Schalteinrichtung zur Verknüpfung verschiedener elektrischer Spannungsebenen in einem Kraftfahrzeug, bei der eine Antriebs-Spannungsebene eine über einen Stromrichter ansteuerbare elektrische Antriebsmaschine und einen einem Zwischenkreis zugeordneten Antriebsenergiespeicher aufweist, und bei der die Antriebs-Spannungsebene über einen elektrischen Wandler mit einer Bordnetz-Spannungsebene verschaltet ist.

Im Automobilbau werden für Elektro- und Hybridfahrzeuge elektrische Maschinen eingesetzt. Aufgrund ihrer guten Steuerbarkeit und Performance setzen sich zunehmend Drehstromantriebe unterschiedlicher Strang- und Polpaarzahl sowie in asynchroner und synchroner Bauform als Antriebe durch. Aus konstruktiven Gesichtspunkten ist dabei eine möglichst hohe elektrische Spannung (200 - 300V) am Antrieb vorzusehen, um bei hoher Leistungsdichte ein Verlustleistungsminimum zu erreichen. Die gewöhnlich im Fahrzeug verwendete Spannungsebene von 12V oder zukünftig 42V ist für einen Antrieb hoher Leistung nicht vorteilhaft einsetzbar. Zur Kopplung der Spannungsebenen von Hochleistungsantrieb und Bordnetz sind deshalb zusätzliche Anpasseinrichtungen notwendig. Insbesondere wenn die Speisung des Bordnetzes durch den Hochleistungsantrieb (Generatorfunktion) übernommen werden soll, ist die Realisierung dieser Anpasselemente sehr aufwendig.

Aus dem allgemeinen Stand der Technik, beispielsweise aus der DE 103 13 752 A1, ist es bekannt, verschiedene Spannungsebenen in Mehrspannungsbordnetzen in Kraftfahrzeugen durch einen (bidirektionalen) DC/DC-Wandler (Gleichspannungswandler) zu verschalten. Insbesondere bei Hybrid- und Elektrofahrzeugen ist es bekannt, einen DC/DC-Wandler zwischen einem Antriebsenergiespeicher, bzw. einem Zwischenkreis, und dem Bordnetz anzuordnen.

Nachteilig bei der bekannten Technik wirkt sich aus, dass sie zu hoher Systemkomplexität, hohen Systemkosten, hohem Bauraumbedarf sowie einem zusätzlichen Gewicht führt. Beispielsweise beansprucht ein DC/DC-Wandler bei einer Bordnetzleistung von 4kW ein Bauvolumen von wenigstens 5I, bei einem Gewicht von mehr als 10kg. Weitere Aufwendungen entstehen durch zusätzliche Einrichtungen, wie Kühlung und Überwachung, die für einen zuverlässigen Betrieb des DC/DC-Wandlers erforderlich sind.

Aufgabe der vorliegenden Erfindung ist es daher, eine Schalteinrichtung zur Verknüpfung unterschiedlicher Spannungsebenen in einem Kraftfahrzeug zu schaffen, die bei wenigstens gleicher Funktionalität wie ein DC/DC-Wandler, einfacher und kostengünstiger ist. EP1112 896 zeigt eine solche Verknüpfung für Systeme mit 14V und 42V Spannung.

Diese Aufgabe wird in Verbindung mit dem Oberbegriff des Anspruches 1 dadurch gelöst, dass der elektrische Wandler als eine Koppelschaltung ausgebildet ist, die antriebsseitig mit wenigstens einem Knotenpunkt einer Wicklungsschaltung der elektrischen Antriebsmaschine und einem auf den Zwischenkreis bezogenen Spannungspotential verbunden ist, und die bordnetzseitig über eine Schalteinheit, die wenigstens eine nicht verschwindende endliche Impedanz aufweist, mit dem Bordnetz verbunden ist.

Erfindungsgemäß wird die elektrische Maschine selbst zur Verknüpfung der Spannungsebenen von Elektromaschine und Bordnetz genutzt. Dabei wird das Bordnetz über die Koppelschaltung direkt mit der elektrischen Maschine gekoppelt. Durch diese Schaltung wird der Umstand ausgenutzt, dass das Potential des Kontenpunktes durch die Ansteuerung des Stromrichters zumindest stufenweise zwischen den Potentialen des Zwischenkreises eingestellt werden kann. Die Frequenz der auf den Zwischenkreis bezogenen Knotenpunktspannung ist dabei unabhängig von der Frequenz des resultierenden Feldes an der zu steuernden elektrischen Maschine. Über diesen zusätzlichen Freiheitsgrad ist der Leistungsfluss in der Koppelschaltung in einem weiten Bereich unabhängig von der mechanischen Leistung der elektrischen Maschine einstellbar. Die Einsteilbarkeit wird lediglich durch die wirksamen Impedanzen von ursprünglicher Schaltung und zusätzlicher Schaltung begrenzt. Die Koppelschaltung kann dabei für monodirektionalen oder bidirektionalen Leistungsfluss ausgelegt werden, d.h. es ist sowohl eine Speisung des Zwischenkreises (inklusive des verbundenen Antriebsenergiespeichers) aus dem Bordnetz als auch des Bordnetzes aus dem Zwischenkreis möglich. Die Funktionstüchtigkeit der Koppelschaltung ist in jedem Arbeitsbereich der elektrischen Maschine gegeben. Insbesondere ist die Richtung des Leistungsflusses innerhalb der Koppelschaltung vom Arbeitsquadranten (Magnetisierungskurve) der elektrischen Maschine nicht abhängig.

Durch die erfindungsgemäße Schalteinrichtung wird der Aufwand für die Kopplung der verschiedenen Spannungsebenen minimiert. Das bedeutet im Einzelnen: keine zusätzlichen magnetischen Elemente, weniger Halbleiterkomponenten, weniger Ansteuerungen, weniger Aufwendungen für die Anschlusstechnik und geringere konstruktive Aufwendungen für Kühlung und Gehäuse. Die zusätzlichen Elemente können in den Stromrichter-, bzw. Wechselrichterteil des Antriebs, unter Verwendung der dort bereits eingesetzten Technologien, integriert werden. Mit der Reduktion des Aufwandes ist eine Verminderung der Kosten des Systems, des Bauraumes und des Gewichts verbunden. Verglichen mit einem klassischen, zwischen den Spannungsebenen verschalteten DC/DC-Wandler gleicher Funktionalität, reduziert sich der Aufwand für Komplexität, Bauraum, Gewicht und Kosten um mehr als zwei Drittel.

Die erfindungsgemäße Koppelschaltung lässt sich insbesondere aufwandsarm als bidirektionaler Wandler verschalten. Dadurch wird als zusätzliche Funktionalität gegenüber herkömmlichen Schaltungen mit DC/DC-Wandlern erreicht, dass der Antriebsenergiespeicher mit einer höherer Spannung gegenüber einem Bordnetz, bzw. Bordnetzenergiespeicher (Fahrzeugbatterie), bei unbenutztem Fahrzeug nicht aus dem Bordnetz versorgt werden muss. Dadurch lassen sich die Speicherverluste des Antriebsenergiespeichers minimieren. Insbesondere kann der Antriebsenergiespeicher bei Stillsetzung des Fahrzeuges aktiv in das Bordnetz entladen und bei Inbetriebnahme des Fahrzeuges in sehr kurzer Zeit wieder geladen werden. Als ein weiterer Vorteil ergibt sich, dass die elektrische Maschine durch eine entsprechende Ansteuerung der einzelnen Schalter auch direkt aus dem Bordnetz mit Antriebsleistung versorgt werden kann, beziehungsweise auch direkt als generatorischer Leistungswandler zwischen mechanischem Abtrieb und Bordnetz wirken kann. Dadurch wird die Wirkungsgradkette der Energiewandlung gegenüber einer herkömmlichen Schaltung mit DC/DC-Wandler verkürzt, weshalb das Gesamtsystem einen entsprechend höheren Wirkungsgrad für die Wandlung zwischen elektrischer Energie und mechanischer Energie aufweist. Durch die Möglichkeit einer direkten Leistungswandlung zwischen Bordnetz und mechanischem Abtrieb lässt sich weiterhin ein Notbetrieb bei defektem Energiespeicher in der Ebene höherer Spannung, bzw. bei (teilweise) defektem Strom-, bzw. Wechselrichter darstellen. Sowohl ein Starter- als auch eine Generatorfunktion lassen sich durch die direkte Kopplung von Bordnetz und elektrischer Maschine darstellen.

Gemäß einer bevorzugten Ausführungsform der Erfindung ist die elektrische Antriebsmaschine als eine mehrsträngige Drehstrommaschine ausgebildet, die mit einer als eine Sternschaltung ausgebildeten Wicklungsschaltung verschaltet und über einen als ein Wechselrichter ausgebildeten Stromrichter ansteuerbar ist, und ist die Koppelschaltung antriebsseitig mit wenigstens einem als ein Sternpunkt ausgebildeten Knotenpunkt der Sternschaltung der Drehstrommaschine verbunden.

Die Koppelschaltung lässt sich besonders effizient mit einer Sternschaltung verbinden. Das Bordnetz wird dabei über die Koppelschaltung mit dem Sternpunkt (Knotenpunkt) der im Stern geschalteten mehrsträngigen Maschine sowie dem auf den Zwischenkreis, bzw. den Energiespeicher bezogenen Potential verbunden. Durch die Ansteuerung des Wechselrichters (Umrichters) kann das Potential des Sternpunktes zwischen den Potentialen des Zwischenkreises eingestellt werden.

Grundsätzlich ist die erfindungsgemäße Koppelschaltung nicht nur für eine "klassische" dreisträngige Drehstrommaschine oder eine Drehstrommaschine mit mehr als drei Strängen geeignet, sondern auch auf eine einsträngige bürstenlose Gleichstrommaschine, bzw. einen Einphasenmotor übertragbar. Entscheidend dabei ist, dass die Maschine eine Wicklungsanzapfung einer Motorspule erlaubt.

Nach einer weiteren bevorzugten Ausführungsform der Erfindung wird das auf den Zwischenkreis bezogene Spannungspotential durch den Mittelpunkt einer Zwischenkreisspannung vorgegeben. Dadurch kann sowohl die Koppeleinrichtung zum Bordnetz als auch die elektrische Maschine in elektrischer Symmetrie betrieben werden, wodurch sich wiederum einfachere Regelungs- und Steuerungsstrukturen ergeben als bei einer Anordnung mit direkt auf ein Zwischenkreispotential bezogener Koppelspannung.

Gemäß einer weiteren bevorzugten Ausführungsform der Erfindung sind Spannungsbegrenzungsmittel vorgesehen, mit deren Hilfe auftretende Überspannungen an einem oder mehreren Knotenpunkten der Wicklungsschaltung begrenzbar sind. Die Spannungsbegrenzungsmittel können als elektrische Klemmelemente ausgebildet sein. Dadurch, dass der Knotenpunkt, bzw. Sternpunkt gegenüber dem Zwischenkreis geklemmt, ist können, durch einen Regler der Bordnetzspannung verursachte, Überspannungen am Sternpunkt begrenzt werden. Bei einer entsprechenden Ausnutzung der magnetischen Flusskopplung in der elektrischen Maschine, bzw. einer Ansteuerung der einzelnen Induktivitäten in einem Flussgleichgewicht, sind zusätzliche Klemmelemente, beispielsweise Clampingdioden, verzichtbar. Das Klemmen (Clamping) kann auch durch eine kapazitive Entlastung des Sternpunktes vorgenommen werden.

Nach einer weiteren bevorzugten Ausführungsform der Erfindung ist bei einer elektrischen Maschine mit mehreren der Sternschaltung zugeordneten Knotenpunkten, die Koppelschaltung zwischen den Knotenpunkten angeordnet. Dadurch wird bei einer zweckmäßigen Ansteuerung, der Zwischenkreis nicht mit dem auftretenden Rippelstrom (Lade- und Entladestrom) der Koppelschaltung beansprucht.

Gemäß einer weiteren bevorzugten Ausführungsform der Erfindung ist eine Regelung der Kopplung der Spannungsebenen in eine Regeleinrichtung der elektrischen Maschine integriert. Dadurch wird bei einer relativ geringen Systemkomplexität eine gute Regelbarkeit auch im Grenzleistungsbereich der Anordnung ermöglicht.

Nach einer weiteren bevorzugten Ausführungsform der Erfindung sind das Bordnetz und die Wicklungsschaltung über einen Trenntransformator gekoppelt. Dadurch wird ein Energieaustausch zwischen den Schaltungsbereichen bei einer sicheren elektrischen (galvanischen) Trennung ermöglicht. Als weiterer Vorteil ergibt sich, dass die kapazitive Belastung des Sternpunktes minimiert wird und der durch das Bordnetz aufgenommene Strom nur noch transformiert in Antriebsenergiespeicher, Wechselrichter und Elektromaschine auftritt. Dadurch lässt sich die Auslegung der einzelnen Bauteile der Schaltungseinrichtung optimieren.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1a:: Ein Blockschema für eine Kopplung zwischen einem Bordnetz und einem Antriebsenergiespeicher,
- Figur 1b:: ein zweites Blockschema für die Kopplung zwischen Bordnetz und Antriebsenergiespeicher,
- Figur 2:: ein Prinzipschaltbild zur direkten Kopplung zwischen einer elektrischen Maschine und dem Bordnetz,
- Figur 3:: eine erste Ausführungsform einer Koppelschaltung zwischen der elektrischen Maschine und dem Bordnetz,
- Figur 4:: eine zweite Ausführungsform der Koppelschaltung,
- Figur 5:: eine dritte Ausführungsform der Koppelschaltung,
- Figur 6:: eine vierte Ausführungsform der Koppelschaltung,
- Figur 7:: eine fünfte Ausführungsform der Koppelschaltung,
- Figur 8:: eine sechste Ausführungsform der Koppelschaltung,
- Figur 9:: eine siebte Ausführungsform der Koppelschaltung und
- Figur 10:: eine achte Ausführungsform der Koppelschaltung.

Eine Schalteinrichtung zur Verknüpfung verschiedener elektrischer Spannungsebenen in einem Kraftfahrzeug besteht im Wesentlichen aus einer Koppelschaltung 4, über die eine elektrische Maschine 3 mit einem Bordnetz 5 direkt verschaltet ist.

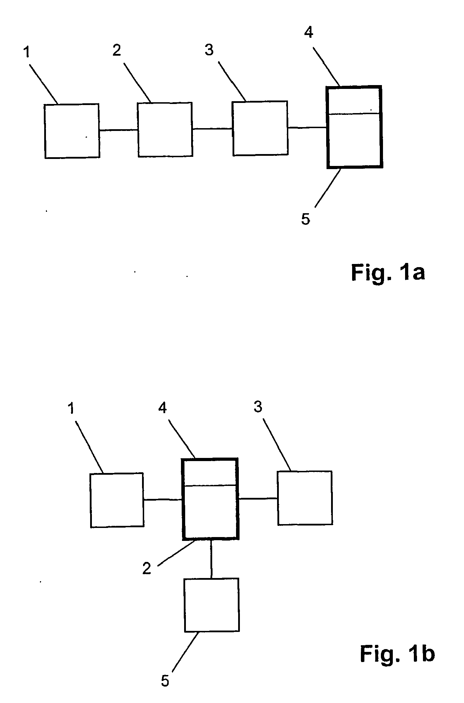

Die Fig. 1 zeigt zwei mögliche Schaltungsstrukturen der Kopplung des Bordnetzes 5 und eines Antriebsenergiespeichers 1 in einem Fahrzeug mit einem elektrischen Antrieb (Hybridfahrzeug mit einem Verbrennungsmotor und einem Elektromotor oder Elektrofahrzeug). Dabei können der Antriebsenergiespeicher 1, ein Wechselrichter 2, die elektrische Maschine 3 und das Bordnetz 5 schaltungstechnisch hintereinander angeordnet sein, wobei ein Sternpunktwandler, der durch die Koppelschaltung 4 dargestellt wird, ein integraler Bestandteil der Bordnetz-Schaltbauteile ist (Fig. 1 a). Der Sternpunktwandler kann auch als ein integraler Bestandteil des Wechselrichters 2 ausgebildet sein. Beispielsweise ist das Bordnetz 5 ein 12V-Bordnetz mit einem Leistungsbedarf unterhalb 4kW, der Antriebsenergiespeicher 1 ein 200V-Speicher, der Wechselrichter 2 ist für eine Leistung von 100kVA ausgelegt und die elektrische Maschine 3 leistet etwa 50kW. Entsprechend ist eine 12V-Spannungsebene und ein 200V-Spannungsebene ausgebildet.

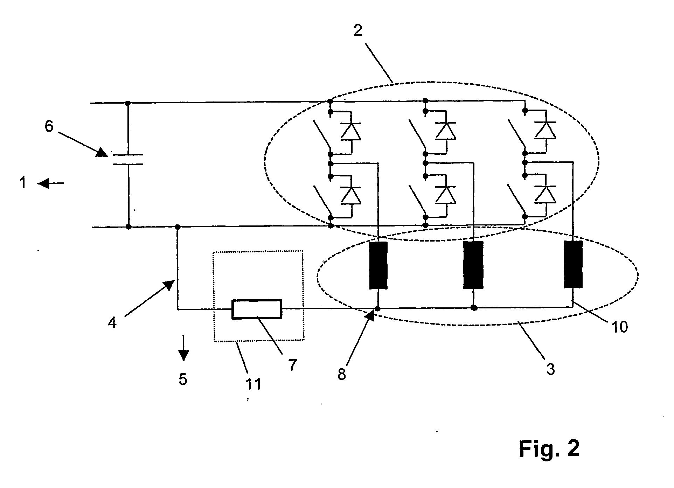

Fig. 2 zeigt den prinzipiellen Schaltungsaufbau mit einer dreisträngigen elektrischen Maschine. Dabei ist das Bordnetz 5 über eine Impedanz 7 (Ersatzimpedanz) in einen Sternpunkt 8 (Kontenpunkt) einer Sternschaltung 10 (Wicklungsschaltung) eingekoppelt. Der dreisträngigen Maschine 3 ist der Wechselrichter 2 als eine Leistungselektronik vorgeschaltet, über die die Maschine 3 ansteuerbar ist. Der Wechselrichter 2 ist mit einem Zwischenkreis 6 verbunden, dem der Antriebsenergiespeicher 1 zugeordnet ist. Die Maschine 3 kann als Motor und als Generator betrieben werden. Die Koppelschaltung 4 ist vorteilhaft als eine bidirektionale Schaltung ausgelegt, so dass sowohl der Zwischenkreis 6 aus dem Bordnetz 5 als auch umgekehrt das Bordnetz 5 aus dem Zwischenkreis 6 speisbar ist.

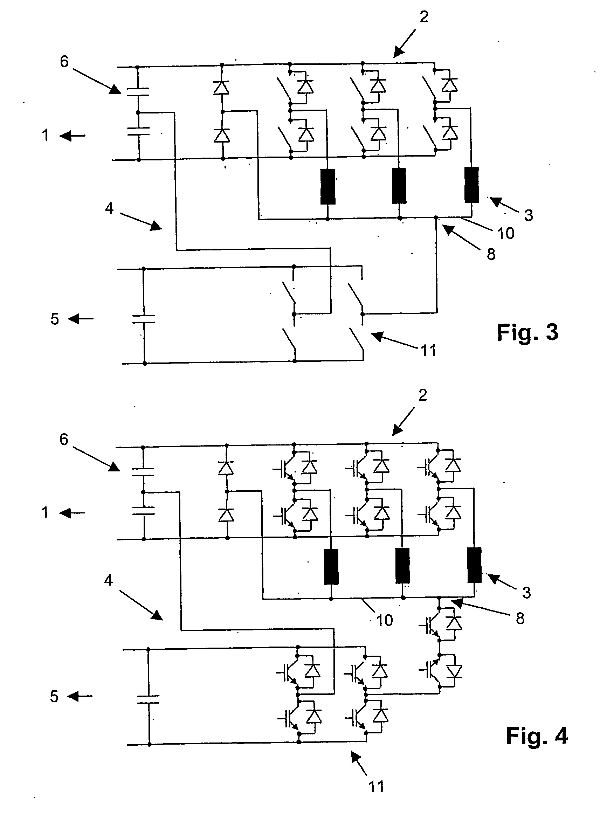

Die Figuren 3 bis 10 zeigen verschiedene Ausführungsformen der Schalteinrichtung. Darin sind im Wesentlichen der Wechselrichter 2 und eine Schalteinheit 11 der Koppelschaltung 4 unterschiedlich ausgeführt. Anhand der Schaltungsbeispiele wird ersichtlich, dass die einzelnen Schaltelemente auf Basis der angreifenden Spannungen und Ströme verschieden zu dimensionieren sind, sodass sich unterschiedliche Optima für den Halbleiteraufwand ergeben. Die Angabe der Schaltungsbeispiele ist nicht erschöpfend. Unter anderem sind durch schrittweise Überführung der einzelnen Schaltungen ineinander und unter Berücksichtigung einschränkender Steuerbedingungen weitere Schaltungsvarianten mit den erfindungsgemäßen Eigenschaften denkbar.

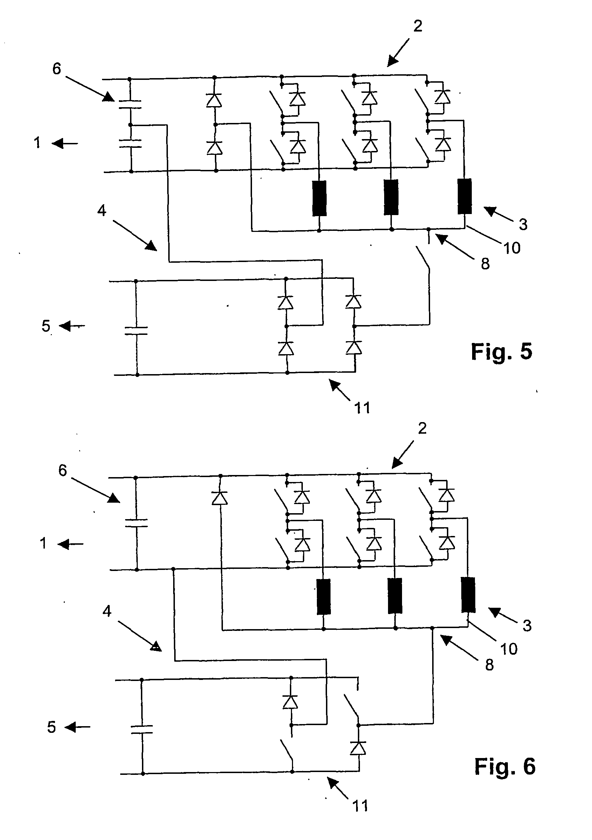

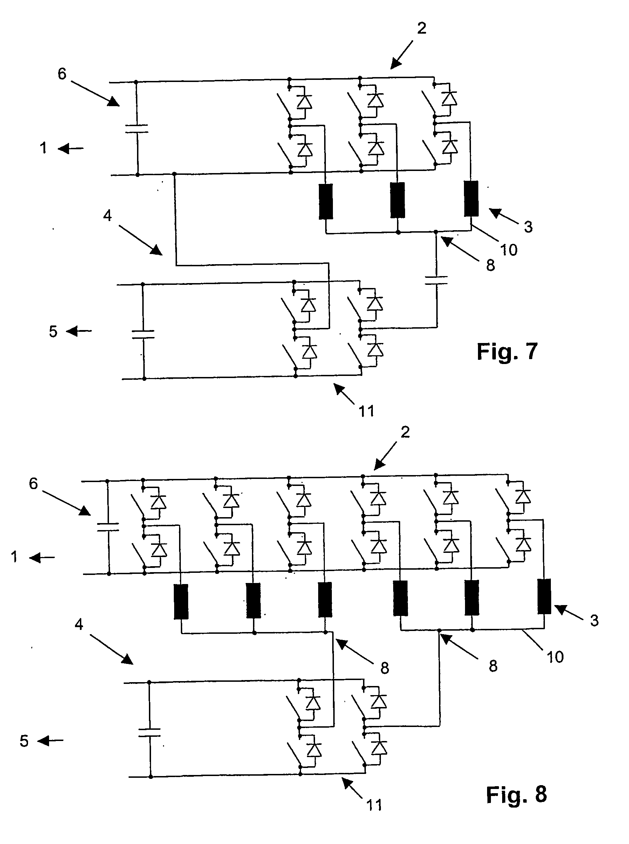

Die Schaltung nach Fig. 3 ermöglicht einen bidirektionalen Leistungsfluss zwischen den Energiespeichern (Antriebsenergiespeicher 1 und Bordnetzenergiespeicher, d.h. Fahrzeugbatterie) der Spannungsebenen. Die elektrische Maschine 3 kann aus beiden Energiespeichern gespeist werden. Die Funktion der Schaltung ist vom Prinzip her nicht vom Typ der Einzelschalter des Schaltteils 11 abhängig. Zwei weitere Ausführungsbeispiele mit den gleichen Eigenschaften zeigen die Fig. 6 und 7.

Das Schaltbild in Fig. 4 zeigt eine Schaltung unter Verwendung von (handelsüblichen) Transistoren als Schaltelemente mit ansonsten gleicher Funktion wie in Fig.3.

Das Ausführungsbeispiel in Fig. 5 zeigt eine Schaltung für einen monodirektionalen Leistungsfluss vom Antriebsenergiespeicher 1 und der elektrischen Maschine 3 ins Bordnetz 5. Diese Schaltung ermöglicht den Betrieb der Maschine 3 am Antriebsenergiespeicher 1.

Die Fig. 8 zeigt eine Schaltung mit einer geteilten Sternschaltung 10, d.h. mit zwei Sternpunkten 8. Die Koppelschaltung 4, bzw. die Schalteinheit 11 ist hier zwischen den Kontenpunkten 8 angeordnet. Ansonsten entspricht diese Schaltung von der Funktionsweise den Schaltungen aus den Figuren 3, 6 und 7.

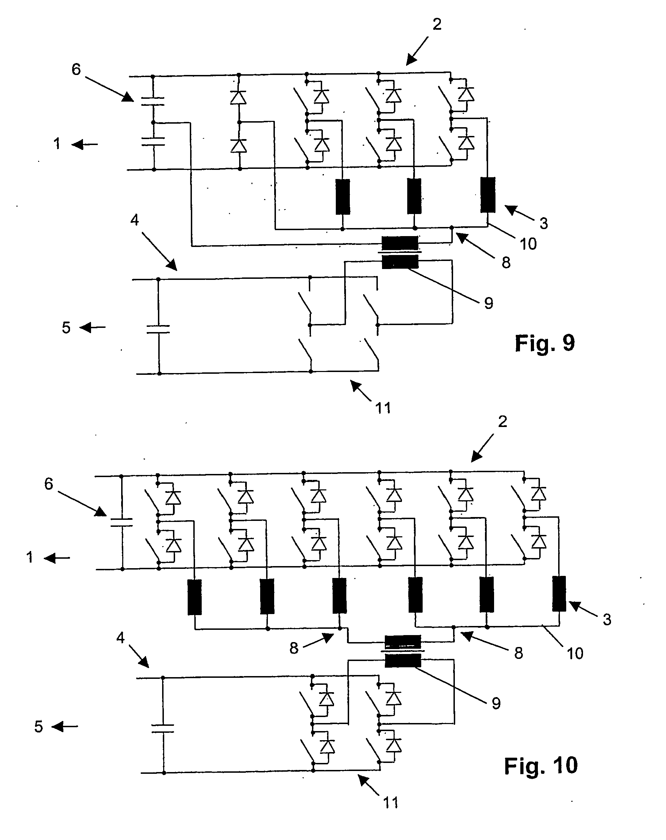

Die Schaltung in Fig. 9 weist einen Trenntransformator 9 auf, der die Sternschaltung 10 und die Schalteinheit 11 trennt. Diese Schaltung ermöglicht einen bidirektionalen Leistungsfluss sowie eine Potentialtrennung zwischen den Energiespeichern. Die Maschine 3 kann auch hier aus beiden Energiespeichern (Antrieb u. Bordnetz) betrieben werden. Schließlich weist die Schaltung in Fig. 10 wiederum eine geteilte Sternschaltung 10 auf und entspricht im Übrigen der Ausführung nach Fig. 9.

### Bezugszeichenliste

- 1: Antriebsenergiespeicher
- 2: Stromrichter
- 3: Elektrische Maschine
- 4: Koppelschaltung
- 5: Bordnetz
- 6: Zwischenkreis
- 7: Impedanz
- 8: Knotenpunkt
- 9: Trenntransformator
- 10: Wicklungsschaltung
- 11: Schalteinheit

## Patentansprüche

1. Schalteinrichtung zur Verknüpfung verschiedener elektrischer Spannungsebenen in einem Kraftfahrzeug die Schalteinrichtung enthaltend eine erste, höhere Spannungsebene, umfassend
- eine je nach Ansteuerung durch einen Stromrichter (2) motorisch oder generatorisch betreibbare und als eine mehrsträngige Drehstrommaschine mit einer als eine Sternschaltung ausgebildeten Wicklungsschaltung (10) ausgebildete elektrische Maschine (3),
- einen mittels des Stromrichters (2) mit der elektrischen Maschine (3) verbundenen, ersten Gleichspannungszwischenkreis (6) und
- einen dem ersten Gleichspannungszwischenkreis (6) zugeordneten, ersten elektrischen Energiespeicher (1),
sowie eine zweite, niedrigere Spannungsebene, umfassend
- einen zweiten Gleichspannungszwischenkreis und
- einen dem zweiten Gleichspannungszwischenkreis zugeordneten, zweiten elektrischen Energiespeicher,
wobei die zweite Spannungsebene ein Bordnetz (2) des Kraftfahrzeugs umfasst und über eine Koppelschaltung mit der ersten Spannungsebene gekoppelt ist,
**dadurch gekennzeichnet,**
**dass** die elektrische Maschine (3) eine Antriebsmaschine des als Hybrid- oder Elektrofahrzeugs ausgebildeten Kraftfahrzeugs ist
und die Koppelschaltung (4) eine Schalteinheit (11) umfasst, die wenigstens eine nicht verschwindende endliche Impedanz (7) aufweist und die antriebsseitig mit dem Sternpunkt (8) der Wicklungsschaltung (10) der elektrischen Maschine (3) verbunden sowie mit einem auf den ersten Gleichspannungszwischenkreis (6) bezogenen Spannungspotential und bordnetzseitig mit dem zweiten Gleichspannungszwischenkreis verbunden ist.

2. Schalteinrichtung nach Anspruch 1,
**dadurch gekennzeichnet,**
**dass** das auf den ersten Gleichspannungszwischenkreis (6) bezogene Spannungspotential durch den Mittelpunkt einer Zwischenkreisspannung des ersten Gleichspannungszwischenkreises (6) vorgegeben wird.

3. Schalteinrichtung nach einem der Ansprüche 1 oder 2,
**dadurch gekennzeichnet,**
**dass** Spannungsbegrenzungsmittel vorgesehen sind, mit deren Hilfe auftretende Überspannungen an einem oder mehreren Knotenpunkten (8) der Wicklungsschaltung (10) begrenzbar sind.

4. Schalteinrichtung nach Anspruch 3,
**dadurch gekennzeichnet,**
**dass** die Spannungsbegrenzungsmittel als elektrische Klemmelemente ausgebildet sind.

5. Schalteinrichtung nach einem der vorangehenden Ansprüche,
**dadurch gekennzeichnet,**
**dass** bei einer elektrischem Maschine (3) mit mehreren der Wicklungsschaltung (10) zugeordneten Knotenpunkten (8) die Koppelschaltung (4) zwischen den Knotenpunkten (8) angeordnet ist.

6. Schalteinrichtung nach einem der vorangehenden Ansprüche,
**dadurch gekennzeichnet,**
**dass** eine Regelung der Kopplung der Spannungsebenen in eine Regeleinrichtung der elektrischen Maschine (3) integriert ist.

7. Schalteinrichtung nach einem der vorangehenden Ansprüche,
**dadurch gekennzeichnet,**
**dass** das die Schalteinrichtung (11) antriebsseitig über einen Trenntransformator (9) mit dem Sternpunkt (8) und dem auf den ersten Gleichspannungszwischenkreis (6) bezogenen Spannungspotential verbunden ist.

## Claims

1. A switching device for linking various electrical voltage levels in a motor vehicle, the switching device containing a first higher voltage plane, comprising
- an electric machine (3) which, depending on the activation by a power converter (2), can be operated by a motor or generator, and is configured as a multi-phase rotary current machine with a winding circuit (10) configured as a star circuit,
- a first direct voltage intermediate circuit (6) connected to the electric machine (3) by means of the power converter (2) and
- a first electrical energy store (1) associated with the first direct voltage intermediate circuit (6),
and a second, lower voltage plane, comprising
- a second direct voltage intermediate circuit and
- a second electrical energy store, associated with the second direct voltage intermediate circuit,
wherein the second voltage plane comprises an onboard electrical system (2) of the motor vehicle and is coupled by a coupling circuit to the first voltage plane,
**characterised in that** the electric machine (3) is a drive machine of the motor vehicle configured as a hybrid or electric vehicle and the coupling circuit (4) comprises a switching unit (11), which has at least one non-diminishing finite impedance (7) and is connected on the drive side to the star point (8) of the winding circuit (10) of the electric machine (3) and to a voltage potential relative to the first direct voltage intermediate circuit (6), and on the onboard electrical system side is connected to the second direct voltage intermediate circuit.

2. A switching device according to claim 1, **characterised in that** the voltage potential relative to the first direct voltage intermediate circuit (6) is predetermined by the centre point of an intermediate circuit voltage of the direct voltage intermediate circuit (6).

3. A switching device according to either of claims 1 or 2, **characterised in that** voltage limitation means are provided, with the aid of which overvoltages occurring can be limited at one or more node points (8) of the winding circuit (10).

4. A switching device according to claim 3, **characterised in that** the voltage limitation means are configured as electric clamping elements.

5. A switching device according to any one of the preceding claims, **characterised in that** in an electric machine (3) with a plurality of node points (8) associated with the winding circuit (10), the coupling circuit (4) is arranged between the node points (8).

6. A switching device according to any one of the preceding claims, **characterised in that** a control of the coupling of the voltage planes is integrated in a control device of the electric machine (3).

7. A switching device according to any one of the preceding claims, **characterised in that** the switching device (11) is connected on the drive side by an isolating transformer (9) to the star point (8) and the voltage potential relative to the first direct voltage intermediate circuit (6).

## Revendications

1. Installation de commutation pour combiner différents niveaux de tension électrique dans un véhicule, cette installation de commutation comportant un premier niveau de tension haut avec :
- une machine électrique (3) qui, suivant la commande par un redresseur de courant (2), fonctionne comme moteur ou comme générateur et est réalisée comme machine à courant tournant à plusieurs branches et un circuit de bobinage (10) monté en étoile,
- un premier circuit intermédiaire de tension continue (6) relié par le redresseur (2) à la machine électrique (3), et
- un premier accumulateur d'énergie électrique (1) associé au premier circuit intermédiaire de tension continue (6),
ainsi qu'un second niveau de tension plus bas comprenant :
- un second circuit intermédiaire de tension continue, et
- un second accumulateur d'énergie électrique associé au second circuit intermédiaire de tension continue,
* le second niveau de tension comporte un réseau embarqué (2) du véhicule et il est couplé par un circuit de couplage au premier niveau de tension,
installation de commutation **caractérisée en ce que**
la machine électrique (3) est une machine motrice du véhicule automobile en forme de véhicule hybride ou de véhicule électrique, et
le circuit de couplage (4) comporte une unité de commutation (11) qui a au moins une impédance limite (7) non nulle, et qui est reliée, côté entraînement, au point étoile (8) du circuit de bobinage (10) de la machine électrique (3) et à un potentiel de tension rapporté au premier circuit intermédiaire de tension continue (6) et, côté réseau embarqué, au second circuit intermédiaire de tension continue.

2. Installation de commutation selon la revendication 1,
**caractérisée en ce que**
le potentiel de tension rapporté au premier circuit intermédiaire de tension continue (6) est prédéfini par le point milieu de la tension du premier circuit intermédiaire de tension continue (6).

3. Installation de commutation selon l'une des revendications 1 ou 2,
**caractérisée en ce que**
des moyens de limitation de tension sont prévus pour limiter les surtensions produites sur un ou plusieurs noeuds (8) du circuit de bobinage (10).

4. Installation de commutation selon la revendication 3,
**caractérisée en ce que**
les moyens de limitation de tension sont des bornes électriques.

5. Installation de commutation selon l'une des revendications précédentes,
**caractérisée en ce que**
dans le cas d'une machine électrique (3) à plusieurs noeuds (8) associés au circuit d'enroulement (10), le circuit de couplage (4) est branché entre les noeuds (8).

6. Installation de commutation selon l'une des revendications précédentes,
**caractérisée par**
une régulation du couplage des plans de tension intégrés dans une installation de régulation de la machine électrique (3).

7. Installation de commutation selon l'une des revendications précédentes,
**caractérisée en ce que**
l'installation de commutation (11) est reliée côté entraînement par l'intermédiaire d'un transformateur de coupure (9) au point étoile (8) et au potentiel de tension rapporté au premier circuit intermédiaire de tension continue (6).
